# EUROPEAN PATENT SPECIFICATION

(11) **EP 3 237 178 B1**
(45) Date of publication and mention of the grant of the patent: **13.03.2019**
(21) Application number: 15820162.4
(22) Date of filing: 23.12.2015
(51) Int. Cl.: B29C 64/118, B29C 64/209, B29C 64/295, H05B 6/14, H05B 6/44, H05B 6/10, B29C 35/08, B33Y 30/00

(54) **DEPOSITION PRINT HEAD**
ABSCHEIDUNGSDRUCKKOPF
TÊTE D'IMPRESSION PAR DÉPÔT

(30) Priority: 23.12.2014 NL 2014044
(43) Date of publication of application: 01.11.2017
(73) Proprietor: Bond High Performance 3d Technology B.V., 8022 AW Zwolle (NL)
(72) Inventor: BRUGGEMAN, Thomas Jonathan, 7521 PH Enschede (NL); BRUGGEMAN, Adrianus, 7521 PH Enschede (NL)
(74) Representative: van der Krans, Arie
(86) International application number: PCT/EP2015/081162
(87) International publication number: WO 2016/102669

(56) References cited:
- CN-A- 103 786 344
- Anonymous: "Induction Heated Nozzle", , 2 January 2011 (2011-01-02), XP055211156, Retrieved from the Internet: URL:http://forums.reprap.org/read.php?1,55 188,page=1 [retrieved on 2015-09-03] & Anonymous: "Induction Heated Nozzle", , 2 January 2011 (2011-01-02), XP055211158, Retrieved from the Internet: URL:http://forums.reprap.org/read.php?1,55 188,page=2 [retrieved on 2015-09-03]
- "Induction Heating", INTERNET CITATION, 9 May 2009 (2009-05-09), pages 1-9, XP002733755, Retrieved from the Internet: URL:http://builders.reprap.org/2009/05/ind uction-heating.html [retrieved on 2014-12-15]

## Description

### FIELD OF THE INVENTION

The invention relates to a deposition print head, a deposition print head assembly, a deposition printer and a method of controlling the deposition print head.

### BACKGROUND

Deposition print heads are known in printers for depositing fluid material on a solid surface. A well-known example is a deposition print head in a three dimensional printer which deposits a molten material to be deposited on a solidified body of the same or a similar material. While controlling the position of the deposition print head in space, the deposition print head can for example be used for creating three dimensional objects.

Deposition print heads known in the art can comprise a heating element, a feed connected to the heating element for the material to deposit, such as plastic material, and a nozzle connected to the heating element. The heating element can comprise a heat source and a heater body and a filament channel through the heater body from the feed to the nozzle for heating depositing material which is guided through the filament channel.

A problem with such a deposition print head is that the heating element body needs to be maintained at a suitable temperature so that the depositing material obtains the right consistency. The heating element body has a certain heat capacity and needs to be in a constant heated state while printing, even while intermittently printing. This causes undesired oozing of molten filament material and thereby fouling a deposition printer comprising the deposition print head. Furthermore continuous heating of filament material can cause material degeneration.

Moreover, intermittent operation of such a heater would cause a delay in operating the deposition print head, since if the heater is turned off during printing for saving energy, it needs to be reheated. Due to the heat capacity of the heating element body this would take some time.

Furthermore the heating element body needs a certain heat capacity in order to maintain its operating temperature, causing a minimal size for the heating element and thereby limiting a number of depositing print heads on a deposition print head support. Plural deposition print heads are desired for allowing an object to be printed in different colors and/or materials, without manual intervention for changing print heads. Document XP055211158 (http://forums.reprap.org/read.php? 1,55188,page=1) discloses a print head in accordance with the preamble of claim 1.

### SUMMARY

It is therefore an object of the invention to overcome the disadvantages in the deposition print heads in the art. The invention is defined by a deposition print head in accordance with claim 1 and by a method in accordance with claim 10.

The disclosure refers to a depositing print head comprising a non- susceptive or low susceptive sleeve, a susceptive element having a filament channel, the susceptive element arranged inside the sleeve, wherein the susceptive element is susceptive to a magnetic field. The filament channel is for feeding a thermoplastic filament in a feed direction. The depositing print head further comprises an exciter arranged around the susceptive element, wherein the exciter is arranged for generating a magnetic field compatible with the susceptive element. The depositing print head further comprises a nozzle attached to one end of the susceptive element.

By applying an alternating electric current or voltage to the exciter, the exciter is activated. It will generate an alternating magnetic field compatible with the susceptive element.

The magnetic field allows the susceptive element to be heated without direct wired contact to an electric power supply.

The susceptive element comprises a ferromagnetic material having a field reluctance causing a hysteresis in response to the alternating magnetic field, causing the susceptive element to heat up. The heated susceptive element subsequently heats up the thermoplastic filament. By supplying sufficient energy to the exciter, the susceptive element reaches a temperature for melting the thermoplastic material of the filament. By feeding the filament through the filament channel, the molten filament material is extruded through the nozzle opening. The extruded molten filament material can be deposited on an object to be created, where it solidifies or cures.

The susceptive element has a low heat capacity, allowing fast response to excitation by the exciter. Thus deposition printing can be performed intermittently without continuously heating up the thermoplastic filament material. Exciting the susceptive element can be accurately timed while feeding the filament, thus preventing oozing or other filament material loss.

In an embodiment according to the invention, the susceptive element comprises a low conductive material. Heating is achieved by eddy currents in the susceptive element material. The use of a magnetic field allows advantageous use of skin effect on the susceptive element material such that the susceptive element heats up at its surface.

In a further embodiment, the low conductive material is applied at an inner wall of the susceptive element, thus allowing the generated heat to be transferred to the filament in the filament channel.

According to the invention, the exciter is arranged around the sleeve. This allows the exciter to be clear, i.e. insulated from the heated susceptive element.

The exciter comprises an induction coil wound around the sleeve. This allows a magnetic field to be generated inside the windings of the coil for exciting the magnetically susceptive element corresponding to the exciter.

In an embodiment according to the invention, the sleeve comprises an insulating, low susceptive material with high heat shock resistance. This allows intermittent operation of the deposition print head, intermittently exciting the susceptive element to a high temperature.

Preferably, the low susceptive material of the sleeve comprises quarts glass.

According to the invention, the sleeve comprises at least one additional susceptive element, the exciter overlapping the at least one additional susceptive element. Multiple susceptive elements allow the filament material to be subjected to a temperature profile. This allows for example to gradually increase the filament material to a melting temperature.

In an embodiment according to the invention, the deposition print head further comprises a spacing element between each pair of susceptive elements. This allows buffering of the thermoplastic filament material. The spacing element acts as a buffer to keep a continuous steady flow of filament material towards the nozzle.

In a further embodiment according to the invention, the spacing element comprises a temperature sensor. The temperature sensor allows the use of a control circuit to control a temperature of a susceptive element preceding or succeeding the spacing element in the feeding direction of the thermoplastic filament.

In an embodiment according to the invention, the exciter is subdivided in a portion per each susceptive element. This allows control of energy transfer per each portion of the exciter, such that a pre-defined temperature profile is achieved.

In an embodiment according to the invention the exciter has a different energy transfer ratio for each portion of the exciter. The exciter can be supplied as a single unit, where the portions each transfer a pre-determined amount of energy to the respective corresponding susceptive element.

In an embodiment according to the invention, the exciter has a different number of windings for each portion of the exciter. This is advantageous for an inductive susceptive element and exciter combination where the exciter is manufactured as an induction coil. Less windings causes a lower energy transfer, a higher number of windings causes a higher energy transfer level.

In an embodiment according to the invention, each exciter portion is separated from another exciter portion. This allows separate energy transfer control for each portion. Thus different temperature profiles can be generated for the filament while being fed through the deposition print head, without changing a hardware configuration of the printer.

In an embodiment according to the invention, each exciter portion has a separately controllable power supply. Induction coils can easily be controlled by varying at least one of current, voltage and frequency of the supply.

In an embodiment according to the invention, the nozzle comprises a susceptive material which is the same as the susceptive material of the susceptive element. This allows the nozzle to be heated by an extension of the exciter, or by a separate exciter. This helps the molten filament material to remain in a molten state until it is extruded from the nozzle. This also allows the deposition print head to start up by melting filament material inside the nozzle after a prolonged state of inactivity, when the filament material has already solidified.

In an embodiment according to the invention, the nozzle is attached to one end of the susceptive element. This prevents the molten filament material to leak towards the inside of the sleeve and/or to the outside of the deposition print head.

In another aspect of the invention, the object is achieved in a deposition print head assembly comprising a support structure and at least one deposition print head as described above.

In another aspect of the invention, the object is achieved in a deposition printer, comprising holding means for holding an article to be deposition printed, positioning means, and control means for controlling a position of the positioning means, and a deposition print head assembly as described above. The deposition printer further has a temperature controller for controlling at least one filament channel element temperature.

The object is also achieved according to another object of the invention in a method of deposition printing, comprising intermittently activating an exciter while feeding thermoplastic filament in a feed direction in a deposition print head as described above.

In an embodiment according to the invention, the deposition print head comprises a plurality of susceptive elements. The method further comprises activating the respective exciters for each susceptive element at a different energy level.

In an embodiment according to the invention, the method further comprises activating the respective exciters for each susceptive element at a different energy level according to a temperature profile.

In an embodiment according to the invention, the temperature profile has an ascending temperature slope and subsequently a descending temperature slope in the feed direction. This allows gradual and homogeneous heating of the filament material.

In an embodiment according to the invention, the method further comprises first preheating the thermoplastic filament to a gel temperature, second preheating the thermoplastic filament to a temperature above a melt temperature, third heating the thermoplastic filament to the melt temperature. This last step maintains the thermoplastic filament at the melt temperature.

In an embodiment according to the invention, the method further comprises buffering the thermoplastic filament between second preheating and the third heating. This allows the thermoplastic material of the filament to heat up in a portion of the filament channel while passing through a susceptive element to obtain a homogeneous and suitable viscosity in the spacing element. This compensates for irregularities of a cross section of the thermoplastic filament, which may not be constant.

In a further embodiment according to the invention, the method further comprises controlling a filament channel temperature. This allows accurate implementation of temperature profiles along the filament channel. This makes the deposition print head according to the invention versatile, adaptable and applicable for different filament materials

### BRIEF DESCRIPTION OF THE DRAWINGS

Figure 1a shows a cross section of a deposition print head according to an embodiment according to the invention.
Figure 1b shows a side view of the deposition print head according to the invention.
Figure 2a shows a susceptive element according to an embodiment according to the invention.
Figure 2b shows a susceptive element and nozzle according to an embodiment according to the invention.
Figure 2c shows a spacing element according to an embodiment according to the invention.
Figure 2d shows a sleeve according to an embodiment according to the invention.
Figure 3a shows a deposition print head according to the embodiment according to the invention.
Figure 3b shows a side view of the deposition print head of fig. 3a according to an embodiment according to the invention.
Figure 4a shows a cross section of a further embodiment of the deposition print head according to the invention.
Figure 4b shows a side view of the deposition print head of fig. 4a according to an embodiment according to the invention.
Figure 5 shows a deposition print head assembly according to an embodiment according to the invention.
Figure 6a and 6b show temperature profiles according to embodiments of the invention.
Figure 7a shows an arrangement of parts of a deposition print head according to an embodiment of the invention.
Figure 7b shows a side view of the arrangement of fig. 7a.
Figure 8 shows a block diagram of temperature control of a deposition print head according to an embodiment of the invention.

### DETAILED DESCRIPTION OF EMBODIMENTS OF THE INVENTION

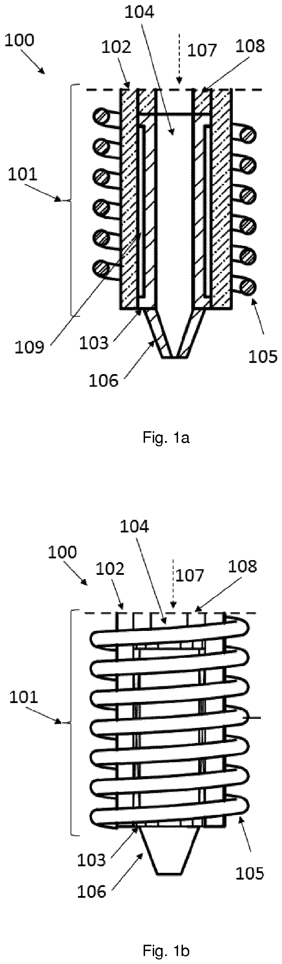

Fig. 1a shows a cross section of a deposition print head 100 having a sleeve 102, a susceptive element 103, an exciter 105 and a nozzle 106. The susceptive element 103 is arranged inside the sleeve 102. The susceptive element 103 has a tubular shape leaving a channel 104 for allowing feed through of thermoplastic filament. The exciter 105 is arranged around the susceptive element 103. The nozzle 106 can preferably be attached to the susceptive element 103, but can also be attached to the sleeve 102. The exciter 105 is connectable to an energy source such as an electric power supply, and when supplied it generates a field compatible with the susceptive element 103.

The exciter 105 can be an induction coil combined with a ferromagnetic tubular element as susceptive element 103. Ferromagnetic materials for the susceptive element 103 include iron, iron alloys. Also materials with low conductivity can be used such as steel, carbon, tin, tungsten, which cause heating up by means of eddy currents induced by the magnetic field from the exciter 105.

When activated using an alternating voltage or current supply, the exciter generates an alternating magnetic field. The susceptive element 103 captures the alternating magnetic field. Due to hysteresis of the ferromagnetic material of the susceptive element 103 and/or the eddy currents as described, the susceptive element 103 heats up. The thus heated susceptive element 103 heats the thermoplastic filament fed through the filament channel 104 to a melting temperature of the thermoplastic material of the filament. The feeding causes sufficient pressure to cause the molten filament to be pressed towards the nozzle 106, where it is extruded. By continuous positioning the deposition print head 100 according to a predetermined pattern, the extrusion can be used for depositing the molten thermoplastic material, which when allowed to solidify, forms small portions i.e. layers on an object to be formed. By gradually forming these layers a complete object can be formed.

A space 109 between the susceptive element 103 and the sleeve 102 allows reduction of heat transfer from the susceptive element 103 to the sleeve 102. The induction coil 105 is made from windings of for example copper wire. In alternative embodiment, the coil 105 can be integrated in the sleeve.

Fig. 1b shows side view of the deposition print head 100 from Fig. 1.

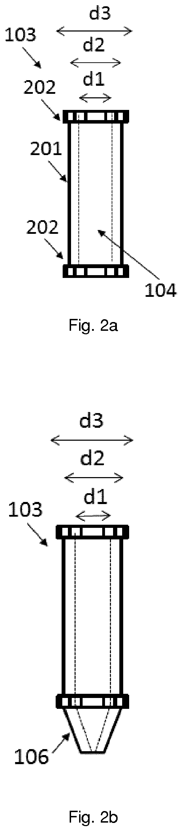

Fig. 2a shows an outline of susceptive element 103. The susceptive element 103 comprises a body having a bobbin shape, comprising a tubular portion 201 and at the both ends of the tubular portion 201 comprising rims 202. The filament channel 104 has an inner diameter d1. The tubular portion 201 has an outer diameter d2 and the rims 202 have an outer diameter d3, such that d1<d2<d3.

The tubular portion 201 and rims 202 can be manufactured from an insulating temperature shock resistant material such as quartz glass or a ceramic material, having an inner layer of the ferromagnetic and/or low conductive material as described. Alternatively, the tubular portion 201 and rims 202 can be manufactured from the ferromagnetic and/or low conductive material as described

Fig. 2b shows the susceptive element 103 of fig. 2a having the nozzle 106 attached to a lower end of the susceptive element 103. This prevents leakage of molten thermoplastic filament material into the sleeve 102.

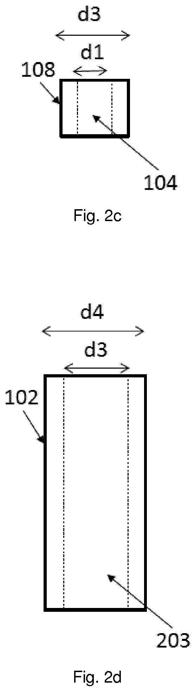

Fig. 2c shows a spacing element 108 for spacing apart two susceptive elements 103 in the sleeve 102. The spacing element has an annular shape and can be manufactured from the same material as the sleeve 102. An inner diameter of the spacing element 108 matches the inner diameter d1 of the susceptive elements 103, whereas an outer diameter of the spacing element 108 matches the inner diameter d3 of the sleeve 102.

Fig. 2d shows a sleeve 102 having a tubular shape, and an inner diameter d3 for receiving at least one susceptive element 103. When multiple susceptive elements 103 are inserted in the sleeve 102, these susceptive elements can be separated and spaced apart by spacing elements 108 between the susceptive elements 103.

The sleeve 102 has an outer diameter d4>d3 providing sufficient wall thickness for thermal insulation of the susceptive element 103 to protect the surroundings of sleeve 102.

The sleeve 102 is made of a thermally insulating and heat shock resistant material. Preferably quartz glass is used. Possible alternatives include ceramic material.

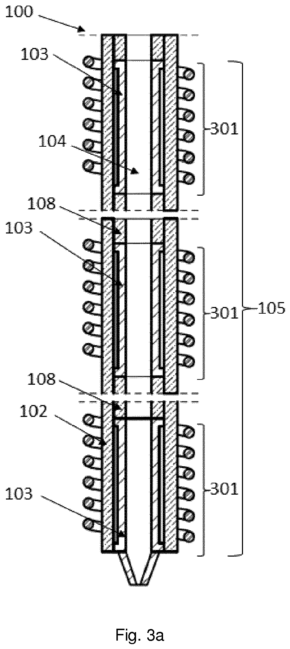

Fig. 3a shows a deposition print head 100 having a multiple susceptive elements 103 separated by spacing elements 108. Susceptive elements 103, the spacing elements 108, sleeve 102, exciter 105 and nozzle 106 are centered around a common filament channel 104. The exciter 105 in fig. 3a can be subdivided in portions, each portion corresponding with a susceptive element 103.

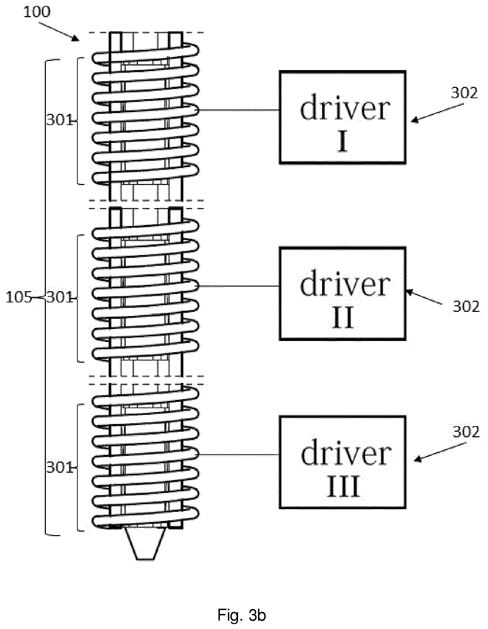

Fig. 3b shows the deposition print head 100 of fig. 3a in a side view, and with driver circuits 302 connected to the respective portions 301 of the exciter 105 of the deposition print head 100. The portions 301 of exciter 105, when electrically separated, allow individual excitation of these portions. In the case of the exciter 105 being formed by an induction coil, each coil corresponding to a portion can be activated at a different energy level by means of a dedicated driver circuit 302. Such a driver circuit 302 can be an amplifier for amplifying an RF-signal. The amplified RF-signal is supplied to the portions 301 of the exciter 105 via electrical connection leads. The energy levels of the RF-signals supplied to the respective portions 301 of the exciter 105 are controllable by a control device (not shown), in accordance with a temperature profile.

RF-signals for exciting the ferromagnetic susceptive elements 103 can have a frequency in a wide range of hundreds of kilohertz to several Megahertz or tens of Megahertz, which frequency range depends on the material and layer thickness, and/or resistivity of the susceptive element material.

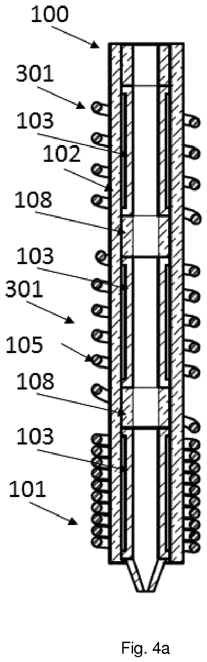

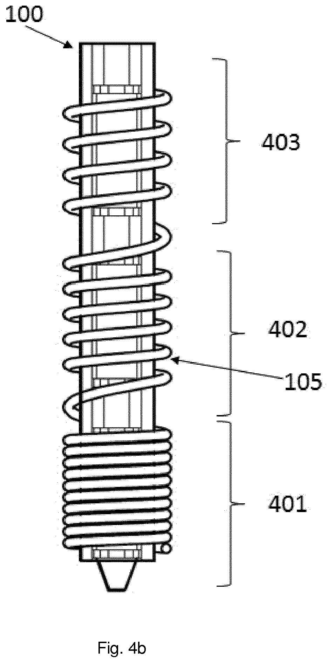

Fig. 4a shows a cross section of an alternative configuration for the deposition print head 100 having three susceptive elements 103. Fig. 4b shows a side view of the deposition print head 100 of fig. 4a. The susceptive elements 103 are arranged in the common sleeve 102 and separated by spacing elements 108 as in the deposition print head of figures 3a and 3b. From figures 4a and also fig. 4b it should be apparent that exciter 105 can be single coil wound around the common sleeve 102. The induction coil shows a varying density of windings around the sleeve 102 for each susceptive element 103. This allows a different energy level for each respective susceptive element 103 with a single exciter 105.

In the example of fig. 4b, the lower portion 401 of the exciter 105 has the most windings for the corresponding susceptive element 103, and will therefore have the highest energy transfer level compared to the middle portion 402 and upper portion 403. It should be clear to the skilled person that the energy transfer level per portion 401, 402, 403 can also be the same for each portion 401, 402, 403. The energy transfer level is chosen to accommodate a temperature profile to be created in a longitudinal direction along the deposition print head 100.

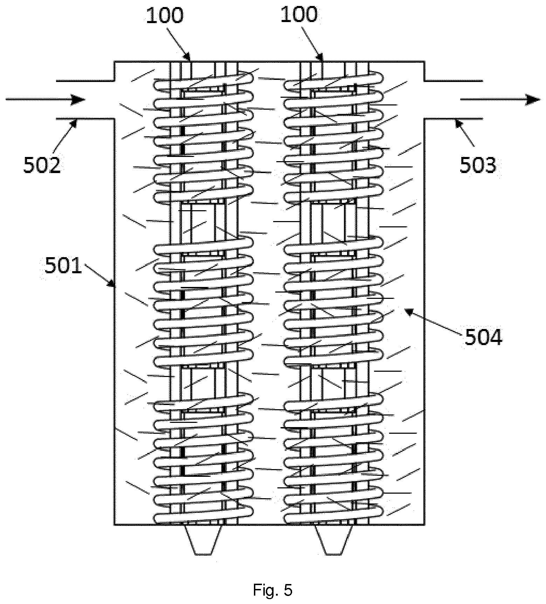

Fig. 5 shows a deposition print head assembly having multiple print heads 100 mounted in a vessel 501. The vessel 501 allows coolant 504 to be introduced via inlet 502 and to be discharged via outlet 503. The coolant 504 includes water, oil, any other liquid. The coolant may also be a gas such as air. The coolant 504 allows the deposition print heads 100 to be operated during prolonged time periods. The vessel 501 can be mounted onto a platform which is connected to a positioning system of a deposition printer.

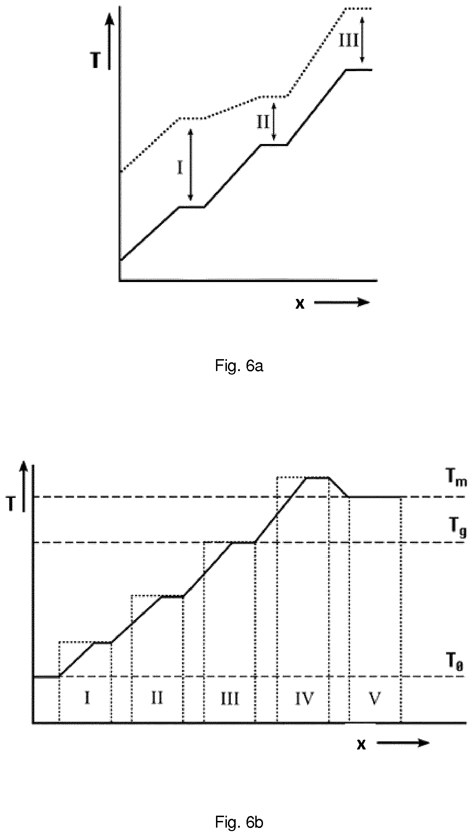

Fig. 6a shows a temperature profile of a deposition print head in feed direction 107, x in fig 6a, in accordance with one of the figures 3a, 3b, 4a and 4b. Fig. 6a shows that while thermoplastic filament material passes through a first susceptive element 103, a filament temperature increases in stage I to a first level indicated. This can be a pre-heating stage. Continuing to a second susceptive element 103 in stage II, the filament temperature is allowed to increase further. Passing by the last susceptive element 103 in stage III, the filament temperature reaches a maximum level. This is preferably a temperature above a melt temperature Tₘ of the thermoplastic filament material, allowing the filament material to be deposited by the nozzle 106 of the deposition print head 100.

By varying the excitation, i.e. energy transfer, from the exciter 105 to the different susceptive elements 103, the temperature level may vary indicated by the dotted line in Fig. 6a.

Fig. 6b shows a more advanced temperature profile of a deposition print head in feed direction 107, x in fig 6b,. Three pre-heating stages are shown indicated by I, II and III, allowing the thermoplastic filament feeding through the filament channel 104 starting from temperature T0 to reach gel temperate Tg. Than in stage IV, the thermoplastic filament gel is heated to a temperature above the melt temperature Tm. This ensures that all of the thermoplastic filament material is molten when it reaches the last stage V where it is allowed to drop in temperature to the melt temperature Tm. Thus after stage V the thermoplastic filament material is homogenously molten before it exits the nozzle 106. The various temperatures can be achieved by controlling the energy transfer levels between the exciter portions and respective susceptive elements 103 in the filament path towards the nozzle output in the feed direction 107. A temperature drop can be realized by keeping the respective portion of the deposition print head at a predetermined temperature. Also a temperature drop can be realized by passing the filament through a spacing element which allows heat transfer from the filament channel 104 towards the sleeve 102.

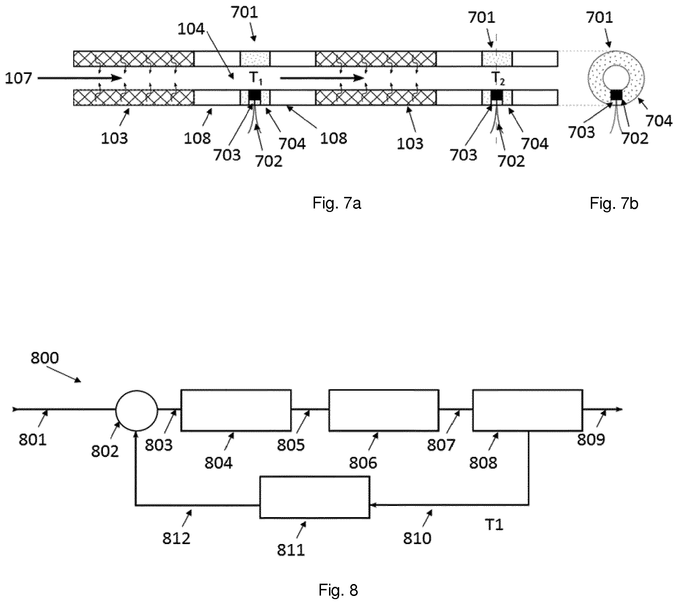

Fig. 7a shows an arrangement of susceptive elements 103 having two spacing elements 108 interposed between the elements 103 and sensing elements 701. The sensing element comprises a temperature sensor 702. All elements are normally arranged in a sleeve 102, which is not shown in fig. 6a.

The sensing elements 701 comprise an annular body 704 from for example the same material as the spacing elements 108 and have a filament channel 104 in communication with the filament channel 104 of the susceptive elements 103 and the spacing elements 108. The temperature sensor 702 is positioned in a cavity 703 such that the sensor is in close proximity to the filament channel 104. The temperature sensor 702 can be a resistive temperature device (RTD) such as for example a PT100 element.

The sensing elements 701 are suitable for measuring the filament temperatures T1 and T2 respectively.

Fig. 7b shows a cross section a sensing element 701 having a temperature sensor 702.

Fig. 8 shows a block diagram of a process for controlling a temperature, e.g. T1 of filament passing through the filament channel 104 of fig. 7a in a deposition print head as described above.

A set temperature 801 is compared with a measured temperature 812 by temperature sensor 811 corresponding to sensor 702 in fig. 7a. The difference temperature 803 is sent to a control unit 804 which converts the temperature difference in a control signal 805 which determines an energy level of an exciter 806. An energy transfer 807 from exciter 806 to susceptive element 808 corresponding to a susceptive element 103 of fig. 7a causes the susceptive element 808 to heat up thermoplastic filament being fed through the filament channel of the susceptive element 808. Temperature sensor 811 corresponding to temperature sensor 702 of fig. 7a, measure the temperature 810 (T1) of the filament which passed through the susceptive element.

The embodiments described above are intended as examples only, not limiting the scope of protection of the claims as set out below.

### Reference numerals

- 100: deposition print head
- 102: sleeve
- 103: susceptive element
- 104: filament channel
- 105: exciter
- 106: nozzle
- 107: feed direction
- 108: spacing element
- 109: space
- 201: body
- 202: rim
- 203: receiving space
- 301: additional heating element
- 302: driver
- 501: vessel
- 502: input
- 503: output
- 504: coolant
- 601: temperature profile
- 602: temperature profile
- 701: sensing element
- 702: temperature sensor
- 703: cavity
- 704: annular body
- 800: temperature control process
- 801: set temperature value
- 802: subtraction unit
- 803: temperature difference
- 804: control unit
- 805: excitation energy
- 806: exciter
- 807: heat transfer
- 808: susceptive element
- 809: hot filament feed
- 810: filament temperature
- 811: temperature sensor
- 812: measured temperature value

## Claims

1. Deposition print head (100) comprising
• a non-susceptive or low susceptive sleeve (102);
• a susceptive element (103) disposed inside the sleeve (102), wherein the susceptive element (103) has a filament channel (104) for feeding a thermoplastic filament in a feed direction (107);
• an exciter (105) disposed around the susceptive element (103), wherein the exciter (105) comprises an induction coil wound around the sleeve for generating an alternating magnetic field compatible with the susceptivity of the susceptive element (103), wherein the susceptive element comprises a ferromagnetic material;
• a nozzle (106) attached to one end of the susceptive element (103);
**characterized in that**
• the sleeve (102) comprises at least one additional susceptive element (103), wherein the exciter (105) overlaps the at least one additional susceptive element (103).

2. Deposition print head (100) according to claim 1, further comprising a spacing element (108) between each pair of susceptive elements (103).

3. Deposition print head (100) according to claim 1 or claim 2, wherein the exciter (105) is subdivided in a portion (401, 402, 403) per each susceptive element (103).

4. Deposition print head (100) according to claim 3, wherein the exciter (105) has a different energy transfer ratio for each portion of the exciter (105).

5. Deposition print head (100) according to claim 3 or claim 4, wherein the exciter (105) has a different number of windings for each portion (401, 402, 403) of the exciter (105, 305).

6. Deposition print head according to any of the claims 4 - 5, wherein each exciter portion (401, 402, 403) is provided with a separately controllable power supply (302).

7. Deposition print head (100) according to any of the preceding claims, further comprising at least one temperature sensor (702) arranged in a cavity in close proximity to the filament channel (104).

8. Deposition printer, comprising
• holding means for holding an article to be deposition printed;
• positioning means; and
• control means for controlling a position of the positioning means;
• a deposition print head assembly attached to the positioning means, comprising a support structure and at least one deposition print head (100) according to any one of the preceding claims.

9. Deposition printer according to claim 8, wherein the deposition print head assembly comprises a vessel (501) having multiple deposition print heads (100), wherein the vessel (501) is provided with a coolant inlet (502) and a coolant outlet (503).

10. Method of deposition printing using the deposition print printer according to any of the claims 8 - 9, comprising
• feeding a thermoplastic filament in a feed direction (107) through the filament channel,
• melting the thermoplastic filament;
• positioning the deposition print head (100) according to a predetermined pattern;
• depositing the molten thermoplastic filament for creating an object;
• activating the respective exciter portions for each susceptive element of the deposition print head (100) at a different energy level according to a temperature profile.

11. Method according to claim 10, wherein the temperature profile has an ascending temperature slope and subsequently a descending temperature slope in the feed direction (107).

12. Method according to claim 11, further comprising first preheating the thermoplastic filament to a gel temperature, second preheating the thermoplastic filament to a temperature above a melt temperature, third heating the thermoplastic filament to the melt temperature.

13. Method according to claim 11, further comprising buffering the thermoplastic filament between second preheating and the third heating using a spacing element (108).

14. Method according to any one of the claims 10 - 13, further comprising controlling (800) a filament temperature (810) using the temperature sensor (702).

15. Method according to any one of the claims 10 - 14, when using a deposition head in accordance with claim 9, further comprising cooling the deposition print heads (100) using a coolant (504).

## Patentansprüche

1. Schmelzschichtungsdruckkopf (100) umfassend
• einer unsuszeptiblen oder schwach suszeptiblen Hülse (102);
• eines suszeptiblen Elements (103), das innerhalb der Hülse (102) angeordnet ist, wobei das suszeptible Element (103) einen Drahtkanal (104) zum Zuführen eines thermoplastischen Drahtes in einer Zuführrichtung (107) aufweist;
• eines Erregers (105), der um das suszeptible Element (103) angeordnet ist, wobei der Erreger (105) eine Induktionsspule umfasst, die um die Hülse gewickelt ist, um ein magnetisches Wechselfeld zu erzeugen, das mit der Suszeptibilität des suszeptiblen Elements (103) kompatibel ist, wobei das suszeptible Element ein ferromagnetisches Material umfasst;
• einer Düse (106), die an einem Ende des suszeptiblen Elements (103) angebracht ist; **dadurch gekennzeichnet, dass**
• die Hülse (102) mindestens ein zusätzliches suszeptibles Element (103) umfasst, wobei der Erreger (105) mindestens das eine zusätzliche suszeptible Element (103) überlappt.

2. Schmelzschichtungsdruckkopf (100) gemäß Anspruch 1, ferner umfassend eines Abstandselements (108) zwischen jedem Paar von suszeptiblen Elementen (103).

3. Schmelzschichtungsdruckkopf (100) gemäß Anspruch 1 oder Anspruch 2, wobei der Erreger (105) für jedes suszeptible Element (103) in einen Abschnitt (401, 402, 403) unterteilt ist.

4. Schmelzschichtungsdruckkopf (100) gemäß Anspruch 3, wobei der Erreger (105) für jeden Abschnitt des Erregers (105) ein unterschiedliches Energieübertragungsverhältnis aufweist.

5. Schmelzschichtungsdruckkopf (100) gemäß Anspruch 3 oder Anspruch 4, wobei der Erreger (105) für jeden Abschnitt (401, 402, 403) des Erregers (105, 305) eine unterschiedliche Anzahl von Wickelungen aufweist.

6. Schmelzschichtungsdruckkopf gemäß einem der Ansprüche 4 bis 5, wobei jeder Abschnitt (401, 402, 403) des Erregers mit einer separaten steuerbaren Stromversorgung (302) versehen ist.

7. Schmelzschichtungsdruckkopf (100) gemäß einem der vorhergehenden Ansprüche, ferner umfassend mindestens eines Temperatursensors (702), der in einem Hohlraum befindlich ist, welcher in der unmittelbaren Nähe des Drahtkanals (104) angeordnet ist.

8. Schmelzschichtungsdrucker, umfassend
• Haltemittels zum Halten eines schmelzschichtungszudruckenden Gegenstandes;
• Positionierungsmittels; und
• Steuermittels zum Steuern einer Position des Positionierungsmittels;
• eine Schmelzschichtungsdruckkopfanordnung, die an dem Positionierungsmittel befestigt ist, umfassend einer Stützstruktur und mindestens eines Schmelzschichtungsdruckkopfs (100) nach einem der vorhergehenden Ansprüche.

9. Schmelzschichtungsdrucker gemäß Anspruch 8, wobei die Schmelzschichtungsdruckkopfanordnung einen Behälter (501) mit mehreren Schmelzschichtungsdruckköpfen (100) umfasst, wobei der Behälter (501) mit einem Kühlmitteleinlass (502) und einem Kühlmittelauslass (503) versetzt ist.

10. Verfahren zum Schmelzschichtungsdrucken unter Verwendung des Schmelzschichtungsdruckers gemäß einem der Ansprüche 8 bis 9, umfassend
• Zuführung eines thermoplastischen Drahts in der Zuführrichtung (107) durch den Drahtkanal,
• schmelzen des thermoplastischen Drahts;
• positionieren des Schmelzschichtungsdruckkopfes (100) gemäß einem vorbestimmten Muster;
• schichten des geschmolzenen thermoplastischen Drahts zum Erzeugen eines Objekts;
• aktivieren der jeweiligen Abschnitte des Erregers für jedes suszeptible Element des Schmelzschichtungsdruckkopfes (100) auf ein unterschiedliches Energieniveau gemäß einem Temperaturprofil.

11. Verfahren gemäß Anspruch 10, wobei das Temperaturprofil eine ansteigende Temperaturneigung und anschließend eine abfallende Temperaturneigung in der Zuführrichtung (107) aufweist.

12. Verfahren gemäß Anspruch 11, ferner umfassend erstens das Vorwärmen des thermoplastischen Drahts auf eine Gelier-Temperatur, zweitens das Vorwärmen des thermoplastischen Drahts auf eine Temperatur oberhalb einer Schmelztemperatur und drittens das Erwärmen des thermoplastischen Drahts auf die Schmelztemperatur.

13. Verfahren gemäß Anspruch 11, ferner umfassend das Puffern des thermoplastischen Drahts zwischen der zweiten Vorwärmung und der dritten Erwärmung unter Verwendung eines Abstandselements (108).

14. Verfahren gemäß einem der Ansprüche 10 bis 13, ferner umfassend das Steuern (800) einer Drahttemperatur (810) unter Verwendung des Temperatursensors (702).

15. Verfahren gemäß einem der Ansprüche 10 bis 14, wenn ein Schmelzschichtungskopf gemäß Anspruch 9 verwendet wird, ferner umfassend das Kühlen der Schmelzschichtungsdruckköpfe (100) unter Verwendung eines Kühlmittels (504).

## Revendications

1. Tête d'impression par dépôt (100) comportant
• une cosse non-susceptible ou peu susceptible (102);
• un élément susceptible (103) disposé à l'intérieur de la cosse (102), dans lequel l'élément susceptible (103) possède un canal de filament (104) pour alimenter un filament thermoplastique dans un sens d'alimentation (107);
• un excitateur (105) disposé autour de l'élément susceptible (103), l'excitateur (105) comportant une bobine d'induction enroulée autour de la cosse pour générer un champ magnétique alternatif compatible avec la susceptibilité de l'élément susceptible (103), dans lequel l'élément susceptible comprend un matériel ferromagnétique;
• une buse (106) fixée à une extrémité de l'élément susceptible (103); **caractérisé en ce que**
• la cosse (102) comprend au moins un élément susceptible supplémentaire (103), dans lequel l'excitateur (105) superpose avec au moins l'élément susceptible supplémentaire (103).

2. Tête d'impression par dépôt (100) selon la revendication 1, comportant en outre un élément d'espacement (108) entre chaque paire d'éléments susceptibles (103).

3. Tête d'impression par dépôt (100) selon la revendication 1 ou la revendication 2, dans laquelle l'excitateur (105) est subdivisé en une partie (401, 402, 403) pour chaque élément susceptible (103).

4. Tête d'impression par dépôt (100) selon la revendication 3, dans laquelle l'excitateur (105) a un ratio de transfert d'énergie différent pour chaque partie de l'excitateur (105).

5. Tête d'impression par dépôt (100) selon la revendication 3 ou la revendication 4, dans laquelle l'excitateur (105) a un nombre différent de bobinage pour chaque partie (401, 402, 403) de l'excitateur (105, 305).

6. Tête d'impression par dépôt selon l'une quelconque des revendications 4 à 5, dans laquelle chaque partie d'excitateur (401, 402, 403) est munie d'une alimentation séparément commandable (302).

7. Tête d'impression par dépôt (100) selon l'une quelconque des revendications précédentes, comportant en outre au moins un capteur de température (702) agencé dans une cavité à proximité immédiate du canal de filament (104).

8. Imprimante par dépôt, comportant
• moyen de maintien pour maintenir un article à imprimer par dépôt;
• moyen de positionnement; et
• moyen de commande pour commander une position du moyen de positionnement;
• ensemble de tête d'impression par dépôt fixé au moyen de positionnement, comportant une structure de support et au moins une tête d'impression par dépôt (100) selon l'une quelconque des revendications précédentes.

9. Imprimante par dépôt selon la revendication 8, dans laquelle l'ensemble tête d'impression par dépôt comprend un réceptacle (501) comportant de multiples têtes d'impression par dépôt (100), dans laquelle le réceptacle (501) étant pourvu d'une entrée de réfrigérant (502) et d'une sortie de réfrigérant (503).

10. Procédé d'impression par dépôt utilisant l'imprimante par dépôt selon l'une quelconque des revendications 8 à 9, comportant
• alimenter un filament thermoplastique dans un sens d'alimentation (107) à travers du canal de filament,
• fondre le filament thermoplastique;
• positionner la tête d'impression par dépôt (100) selon un motif prédéterminé;
• déposer le filament thermoplastique fondu pour créer un objet;
• activer les parties d'excitation respectives pour chaque élément susceptible de la tête d'impression par dépôt (100) à un niveau d'énergie différent selon un profil de température.

11. Procédé selon la revendication 10, dans lequel le profil de température a une pente de température ascendante et ensuite une pente de température descendante dans le sens d'alimentation (107).

12. Procédé selon la revendication 11, comportant en outre un premier préchauffage le filament thermoplastique à une température de gel, un deuxième préchauffage du filament thermoplastique à une température au-dessus d'une température de fusion, un troisième chauffage du filament thermoplastique à la température de fusion.

13. Procédé selon la revendication 11, comportant en outre un tamponnage du filament thermoplastique entre le deuxième préchauffage et le troisième chauffage en utilisant un élément d'espacement (108).

14. Procédé selon l'une quelconque des revendications 10 à 13, comportant en outre le contrôle (800) d'une température de filament (810) en utilisant le capteur de température (702).

15. Procédé selon l'une quelconque des revendications 10 à 14, lors de l'utilisation d'une tête de dépôt selon la revendication 9, comportant en outre le refroidissement des têtes d'impression par dépôt (100) en utilisant un réfrigérant (504).
